# EUROPÄISCHE PATENTSCHRIFT

(11) **EP 2 030 309 B1**
(45) Veröffentlichungstag und Bekanntmachung des Hinweises auf die Patenterteilung: **15.07.2015**
(21) Anmeldenummer: 07729588.9
(22) Anmeldetag: 29.05.2007
(51) Int. Cl.: H02K 11/04, H02K 11/00, H02K 5/15

(54) **ANTRIEBSEINRICHTUNG MIT EINEM ELEKTROMOTOR UND EINER ANSTEUERELEKTRONIK MIT SCHALTUNGSTRÄGER**
DRIVE DEVICE WITH AN ELECTRIC MOTOR AND DRIVE ELECTRONICS WITH A CIRCUIT MOUNT
DISPOSITIF D'ENTRAINEMENT COMPRENANT UN MOTEUR ELECTRIQUE ET UNE ELECTRONIQUE DE COMMANDE AVEC PORTE-CIRCUIT

(30) Priorität: 07.06.2006 DE 102006026403
(43) Veröffentlichungstag der Anmeldung: 04.03.2009
(73) Patentinhaber: Robert Bosch GmbH, 70442 Stuttgart (DE)
(72) Erfinder: JACOB, Wolfgang, 72160 Horb (DE); RUF, Christoph, 72800 Eningen (DE); NGUYEN, Quoc-Dat, 72760 Reutlingen (DE); KIMMICH, Peter, 71101 Schoeneich (DE)
(86) Internationale Anmeldenummer: PCT/EP2007/055166
(87) Internationale Veröffentlichungsnummer: WO 2007/141157

(56) Entgegenhaltungen:
- EP-A- 0 376 530
- EP-A1- 0 671 804
- DE-A1- 4 122 529
- DE-A1- 10 113 559
- DE-A1- 19 507 123
- US-A- 5 939 807
- US-A1- 2003 173 839
- US-A1- 2005 218 861

## Beschreibung

### Stand der Technik

Die Erfindung betrifft eine Antriebseinrichtung mit einem Elektromotor und einer Ansteuerelektronik für den Elektromotor, wobei die Ansteuerelektronik auf einem Schaltungsträger angeordnet ist.

Es ist eine Antriebseinrichtung der eingangs genannten Art bekannt, die einen Elektromotor und ein Steuergerät zur Ansteuerung des Elektromotors aufweist. Diese beiden Baugruppen liegen als eigenständige Geräte vor. Der den Elektromotor einsetzende Anwender hat die Möglichkeit, das Steuergerät mit seinem Gehäuse an das Gehäuse des Elektromotors zu schrauben und anschließend die notwendigen elektrischen Verbindungen zwischen diesen beiden Geräten vorzunehmen.

Aus der Offenlegungsschrift US 2005/0218861 A1 ist der Aufbau eines Elektromotors derart bekannt, dass dieser eine Ansteuerelektronik für den Elektromotor aufweist und die Ansteuerelektronik auf einem Schaltungsträger angeordnet ist, wobei der Schaltungsträger zusätzlich Träger eines Lagers des Elektromotors ist.

### Offenbarung der Erfindung

Aufgrund des erfindungsgemäßen Vorgehens, bei dem die Antriebseinrichtung einen Elektromotor und eine Ansteuerelektronik für den Elektromotor aufweist, die auf einem Schaltungsträger angeordnet ist, übernimmt der Schaltungsträger eine Doppelfunktion, indem er einerseits die Ansteuerelektronik trägt und andererseits ein mechanisches Bauteil oder ein Teil eines mechanischen Bauteils des Elektromotors ist. Hierdurch wird die Ansteuerelektronik in den Elektromotor integriert, wobei der Schaltungsträger die Funktion eines mechanischen Bauteils oder eines Teils eines mechanischen Bauteils des Elektromotors mit übernimmt.

Das vorstehend erwähnte Verbinden zweier selbstständiger Geräte durch Aneinanderschrauben der Gehäuse und dergleichen kann entfallen, das heißt, die aus dem Stand der Technik bekannten mechanischen und elektrischen Schnittstellen zwischen Elektromotor und Ansteuerelektronik sind erfindungsgemäß aufgehoben.

Nach einer Weiterbildung der Erfindung ist vorgesehen, dass der Schaltungsträger ein Gehäuseteil des Elektromotors bildet. Demzufolge übernimmt er die Funktion eines Gehäuseteils und gleichzeitig die Funktion des Tragens der Ansteuerelektronik, die auf dem Schaltungsträger aufgebaut ist.

Es ist vorteilhaft, wenn der Schaltungsträger Träger eines Lagers für den Elektromotor ist. Es kommt demzufolge insbesondere eine weitere Funktion hinzu, indem der Schaltungsträger als Aufnehmer für ein Lager des Elektromotors dient.

Nach einer Weiterbildung der Erfindung ist vorgesehen, dass der Schaltungsträger als Lagerschild des Elektromotors ausgebildet ist. Das Lagerschild trägt demzufolge eines der Lager des Elektromotors. Der so ausgebildete Schaltungsträger kann darüber hinaus ein Teil des Gehäuses des Elektromotors bilden und übernimmt ferner auch seine grundlegende Funktion, nämlich die Aufnahme der Ansteuerelektronik.

Es ist vorteilhaft, wenn der Schaltungsträger als Tiefziehteil ausgebildet ist. Durch eine derartige Formgebung kann er schalenartig die elektronischen Bauteile der Ansteuerelektronik aufnehmen. Ein tiefgezogener Lagerflansch des Schaltungsträgers eignet sich hervorragend, um das erwähnte Lager des Elektromotors aufzunehmen.

Der Schaltungsträger besteht bevorzugt aus Metall, insbesondere aus Aluminium oder einer Aluminiumlegierung.

Ferner ist es vorteilhaft, wenn der Schaltungsträger eine tiefgezogene Aufnahme für das Lager des Elektromotors aufweist. entfallen, das heißt, die aus dem Stand der Technik bekannten mechanischen und elektrischen Schnittstellen zwischen Elektromotor und Ansteuerelektronik sind erfindungsgemäß aufgehoben.

Erfindungsgemäß ist vorgesehen, dass der Schaltungsträger ein Gehäuseteil des Elektromotors bildet. Demzufolge übernimmt er die Funktion eines Gehäuseteils und gleichzeitig die Funktion des Tragens der Ansteuerelektronik, die auf dem Schaltungsträger aufgebaut ist.

Es ist vorteilhaft, wenn der Schaltungsträger Träger eines Lagers für den Elektromotor ist. Es kommt demzufolge insbesondere eine weitere Funktion hinzu, indem der Schaltungsträger als Aufnehmer für ein Lager des Elektromotors dient.

Nach einer Weiterbildung der Erfindung ist vorgesehen, dass der Schaltungsträger als Lagerschild des Elektromotors ausgebildet ist. Das Lagerschild trägt demzufolge eines der Lager des Elektromotors. Der so ausgebildete Schaltungsträger kann darüber hinaus ein Teil des Gehäuses des Elektromotors bilden und übernimmt ferner auch seine grundlegende Funktion, nämlich die Aufnahme der Ansteuerelektronik.

Es ist vorteilhaft, wenn der Schaltungsträger als Tiefziehteil ausgebildet ist. Durch eine derartige Formgebung kann er schalenartig die elektronischen Bauteile der Ansteuerelektronik aufnehmen. Ein tiefgezogener Lagerflansch des Schaltungsträgers eignet sich hervorragend, um das erwähnte Lager des Elektromotors aufzunehmen.

Der Schaltungsträger besteht bevorzugt aus Metall, insbesondere aus Aluminium oder einer Aluminiumlegierung.

Ferner ist es vorteilhaft, wenn der Schaltungsträger eine tiefgezogene Aufnahme für das Lager des Elektromotors aufweist.

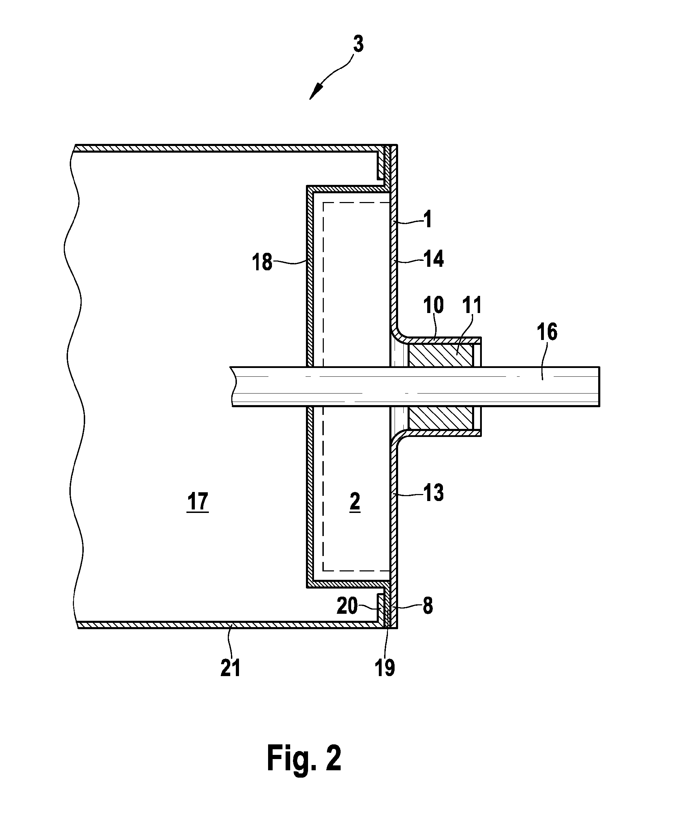

- Figur 2: eine schematische Schnittansicht durch einen Bereich eines Elektromotors, dessen Lagerschild von dem Schaltungsträger gebildet ist.

### Ausführungsform der Erfindung

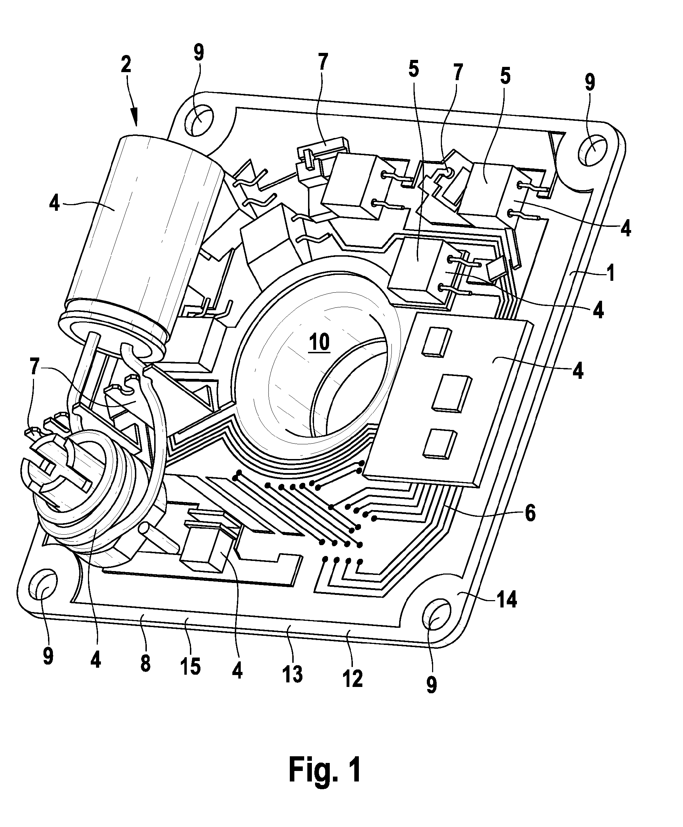

Die Figur 1 zeigt einen Schaltungsträger 1, auf dem eine Ansteuerelektronik 2 für einen nicht näher dargestellten Elektromotor 3 (Figur 2) aufgebaut ist. Die Ansteuerelektronik 2 besteht aus mehreren elektronischen Bauelementen 4, zu denen auch Leistungstransistoren 5 gehören. Ferner umfasst die Ansteuerelektronik 2 Leiterbahnen 6 und elektrische Steckeinrichtungen 7. Die elektrischen Steckeinrichtungen 7 lassen sich mit entsprechenden Gegensteckern für das Zuführen einer Versorgungsspannung, das Abführen einer Ansteuerspannung für den Elektromotor und auch für das Zuführen von Steuergrößen verbinden.

Der Schaltungsträger 1 ist als Tiefziehteil ausgebildet. Er besteht aus Aluminium oder einer Aluminiumlegierung und weist eine Wannenform mit umlaufendem Flansch 8 auf. Im Innern der Wanne ist die erwähnte Ansteuerelektronik 2 im Wesentlichen untergebracht. Der Flansch 8 weist einen quadratischen Querschnitt auf und wird von Befestigungsbohrungen 9 durchsetzt. Im Zentrum besitzt der Schaltungsträger 1 eine tiefgezogene Aufnahme 10, die der Aufnahme eines Lagers 11 (Figur 2) des Elektromotors 3 dient.

Demzufolge bildet der Schaltungsträger 1 ein mechanisches Bauteil 12 des Elektromotors 3, nämlich ein Lagerschild 13 des Elektromotors 3. Das Lagerschild 13 und demzufolge der Schaltungsträger 1 bilden ferner ein Gehäuseteil 14 des Elektromotors 3, was insbesondere der Figur 2 zu entnehmen ist.

Einige der elektronischen Bauelemente 4, insbesondere die genannten Leistungstransistoren 5, sind im thermischen Kontakt mit dem Schaltungsträger 1, sodass von der Ansteuerelektronik im Betrieb entwickelte Wärme auf den Schaltungsträger 1 übertragen wird, sodass dieser einen Kühlköper 15 für die Ansteuerelektronik 2 bildet.

Gemäß Figur 2 weist der Elektromotor 3 eine Welle 16 auf, die im Lager 11 gelagert wird, wobei das Lager 11 in der Aufnahme 10 des Schaltungsträgers 1 gehalten ist. Der Schaltungsträger 1 bildet demzufolge das erwähnte Lagerschild 13, das auch ein Teil des Gehäuses des Elektromotors 3 bildet. Im Innern 17 des Elektromotors 3 befindet sich die Ansteuerelektronik 2, die mittels einer gestrichelt eingezeichneten Linie angedeutet ist. Die Ansteuerelektronik 2 wird von einem Deckel 18 überfangen, der von der Welle 16 durchsetzt wird und die Ansteuerelektronik 2 schützt. Der Flansch 8 des Schaltungsträgers 1 ist mit einem Flansch 19 des Deckels 18 und mit einem Flansch 20 des Gehäuses 21 des Elektromotors 3 verschraubt. Hierzu werden entsprechende Schraubverbindungen verwendet, die durch die Befestigungsbohrungen 9 und entsprechende Bohrungen in den Flanschen 19 und 20 hindurchgeführt werden.

Aufgrund des erfindungsgemäßen Vorgehens ergeben sich sehr niedrige Wärmewiderstände für die von den elektronischen Bauteilen 4 der Ansteuerelektronik 2 entwickelte Wärme, da ein guter Wärmeübergang auf den wärmetechnisch gut leitenden Schaltungsträger 1 realisiert ist, sodass der Schaltungsträger 1 als Kühlkörper 15 wirkt. Da darüber hinaus der Schaltungsträger 1 mit dem Deckel 18 und/oder mit dem Gehäuse 21 wärmeleitfähig verbunden ist, dienen auch diese Bauteile der Wärmeabführung. Alle genannten Bauelemente weisen untereinander nur einen sehr geringen Wärmewiderstand auf, sodass die Wärme der Leistungshalbleiter, insbesondere der Leistungstransistoren 5, beziehungsweise anderer Bauelemente sehr gut abgeführt wird, mit der Folge, dass kleinere Leistungshalbleiter und/oder Bauelemente eingesetzt werden können. Ferner lassen sich im Gesamtsystem Bauteile und Prozesse gegenüber den bekannten Vorrichtungen einsparen, da ein separates Leistungssubstrat nicht nötig ist, keine Grundplatte eines Steuergerätes verwendet werden muss und auch das Aufkleben des Leistungssubstrats auf die Grundplatte entfallen kann. Insgesamt kann die Elektronik und das Gesamtsystem kleiner aufgebaut werden als dies bisher der Fall war und auch kostengünstiger.

Das erwähnte Lager des Elektromotors, das beispielsweise als Kugellager ausgebildet sein kann, ist einfach und effektiv am Schaltungsträger 1, beispielsweise durch Einpressen, zu befestigen, wobei der so ausgestattete Schaltungsträger 1 als Lagerschild 13 und Gehäuseteil 14 direkt an den Elektromotor geschraubt wird. Die Ansteuerelektronik 2 kann zusätzlich mit dem erwähnten Deckel 18 abgedeckt werden.

Die Erfindung ist insbesondere bei Elektromotoren im Fahrzeugbereich einsetzbar, beispielsweise bei Elektromotoren mit Ansteuerelektronik, die dem Betrieb der Servolenkung des Fahrzeugs dienen.

## Patentansprüche

1. Antriebseinrichtung mit einem Elektromotor und einer Ansteuerelektronik für den Elektromotor, wobei die Ansteuerelektronik auf einem Schaltungsträger angeordnet ist, wobei der Schaltungsträger (1) Leiterbahnen umfasst, **dadurch gekennzeichnet, dass** der Schaltungsträger ein Gehäuseteil (14) des Elektromotors (3) ist, so dass ein separates Leistungssubstrat nicht nötig ist.

2. Antriebseinrichtung nach einem der vorhergehenden Ansprüchen, **dadurch gekennzeichnet, dass** der Schaltungsträger (1) Träger eines Lagers (11) für den Elektromotor (3) ist.

3. Antriebseinrichtung nach einem der vorhergehenden Ansprüchen, **dadurch gekennzeichnet, dass** der Schaltungsträger (1) als Lagerschild (13) des Elektromotors (3) ausgebildet ist.

4. Antriebseinrichtung nach einem der vorhergehenden Ansprüchen, **dadurch gekennzeichnet, dass** der Schaltungsträger (1) als Tiefziehteil ausgebildet ist.

5. Antriebseinrichtung nach einem der vorhergehenden Ansprüchen, **dadurch gekennzeichnet, dass** der Schaltungsträger (1) aus Metall, insbesondere aus Aluminium oder einer Aluminiumlegierung, besteht.

6. Antriebseinrichtung nach einem der vorhergehenden Ansprüchen, **dadurch gekennzeichnet, dass** der Lagerkäfig in den Schaltungsträger eingepresst, eingenietet, eingeschweißt, eingeklebt oder eingeschraubt ist.

7. Antriebseinrichtung nach einem der vorhergehenden Ansprüchen, **dadurch gekennzeichnet, dass** der Schaltungsträger (1) einen Kühlkörper (15) für die Ansteuerelektronik (2) bildet.

8. Antriebseinrichtung nach einem der vorhergehenden Ansprüchen, **dadurch gekennzeichnet, dass** der Schaltungsträger (1) wärmeleitfähig mit dem Elektromotor (3) verbunden ist.

9. Antriebseinrichtung nach einem der vorhergehenden Ansprüchen, **dadurch gekennzeichnet, dass** dem Schaltungsträger (1) ein Deckel (18) zugeordnet ist, der die Ansteuerelektronik (2) abdeckt.

## Claims

1. Drive device comprising an electric motor and an actuation electronics system for the electric motor, wherein the actuation electronics system is arranged on a circuit carrier, wherein the circuit carrier (1) comprises conductor tracks, **characterized in that** the circuit carrier is a housing part (14) of the electric motor (3), and therefore a separate power substrate is not required.

2. Drive device according to Claim 1, **characterized in that** the circuit carrier (1) is a carrier for a bearing (11) for the electric motor (3).

3. Drive device according to either of the preceding claims, **characterized in that** the circuit carrier (1) is in the form of an end plate (13) of the electric motor (3).

4. Drive device according to one of the preceding claims, **characterized in that** the circuit carrier (1) is in the form of a deep-drawn part.

5. Drive device according to one of the preceding claims, **characterized in that** the circuit carrier (1) is composed of metal, in particular of aluminium or an aluminium alloy.

6. Drive device according to one of the preceding claims, **characterized in that** the bearing cage is pressed, riveted, welded, adhesively bonded or screwed into the circuit carrier.

7. Drive device according to one of the preceding claims, **characterized in that** the circuit carrier (1) forms a heat sink (15) for the actuation electronics system (2).

8. Drive device according to one of the preceding claims, **characterized in that** the circuit carrier (1) is connected to the electric motor (3) in a thermally conductive manner.

9. Drive device according to one of the preceding claims, **characterized in that** a cover (18), which covers the actuation electronics system (2), is associated with the circuit carrier (1).

## Revendications

1. Dispositif d'entraînement comprenant un moteur électrique et une électronique de commande pour le moteur électrique, l'électronique de commande étant disposée sur un support de circuit, le support de circuit (1) comprenant des pistes conductrices, **caractérisé en ce que** le support de circuit est une partie de boîtier (14) du moteur électrique (3), de telle sorte qu'un substrat de puissance séparé ne soit pas nécessaire.

2. Dispositif d'entraînement selon la revendication 1, **caractérisé en ce que** le support de circuit (1) est le support d'un palier (11) pour le moteur électrique (3).

3. Dispositif d'entraînement selon l'une quelconque des revendications précédentes, **caractérisé en ce que** le support de circuit (1) est réalisé sous forme de flasque de palier (13) du moteur électrique (3).

4. Dispositif d'entraînement selon l'une quelconque des revendications précédentes, **caractérisé en ce que** le support de circuit (1) est réalisé sous forme de pièce emboutie profond.

5. Dispositif d'entraînement selon l'une quelconque des revendications précédentes, **caractérisé en ce que** le support de circuit (1) se compose de métal, en particulier d'aluminium ou d'un alliage d'aluminium.

6. Dispositif d'entraînement selon l'une quelconque des revendications précédentes, **caractérisé en ce que** la cage de palier est pressée, rivetée, soudée, collée ou vissée dans le support de circuit.

7. Dispositif d'entraînement selon l'une quelconque des revendications précédentes, **caractérisé en ce que** le support de circuit (1) forme un corps de refroidissement (15) pour l'électronique de commande (2).

8. Dispositif d'entraînement selon l'une quelconque des revendications précédentes, **caractérisé en ce que** le support de circuit (1) est connecté de manière thermoconductible au moteur électrique (3).

9. Dispositif d'entraînement selon l'une quelconque des revendications précédentes, **caractérisé en ce qu'**un couvercle (18) est associé au support de circuit (1), lequel recouvre l'électronique de commande (2).
